**Europäisches Patentamt**

**European Patent Office**

**Office européen des brevets**

(11) Veröffentlichungsnummer: **0 137 151**
**B1**

# (12) EUROPÄISCHE PATENTSCHRIFT

(45) Veröffentlichungstag der Patentschrift:
26.08.87

(21) Anmeldenummer: **84108342.1**

(22) Anmeldetag: **21.05.82**

(60) Veröffentlichungsnummer der früheren Anmeldung
nach Art. 76 EPÜ: **0079348**

(51) Int. Cl.⁴: **A 23 G 3/26**

(54) **Vorrichtung zum Überziehen von Teilchen, insbesondere Arzneimittel-Teilchen, wie Tabletten.**

(30) Priorität: **22.05.81 CH 3346/81**
**22.05.81 CH 3347/81**

(43) Veröffentlichungstag der Anmeldung:
**17.04.85 Patentblatt 85/16**

(45) Bekanntmachung des Hinweises auf die Patenterteilung:
**26.08.87 Patentblatt 87/35**

(84) Benannte Vertragsstaaten:
**AT BE CH DE FR GB LI NL**

(56) Entgegenhaltungen:
**DE - B - 1 225 035**
**US - A - 3 357 398**

**Die Akte enthält technische Angaben, die nach dem Eingang der Anmeldung eingereicht wurden und die nicht in dieser Patentschrift enthalten sind.**

(73) Patentinhaber: **Glatt Maschinen- und Apparatebau AG, Kraftwerkstrasse 3, CH-4133 Pratteln (CH)**

(72) Erfinder: **Glatt, Werner, Bühlmühle, D-7851 Binzen (DE)**
Erfinder: **Grab, Erwin, Friedrich Neffstrasse 16, D-7851 Rümmingen (DE)**

(74) Vertreter: **Eder, Carl E. et al, Patentanwaltsbüro EDER AG Münchensteinerstrasse 2, CH-4052 Basel (CH)**

Beschreibung

Die Erfindung betrifft eine Vorrichtung gemäss dem Oberbegriff des Anspruchs 1.

Zum Begriff «Arzneimittel-Teilchen» sei bemerkt, dass darunter feste oder mindestens einen festen Mantel aufweisende Arzneimittel, d.h. sogenante feste Arzneimittel-Darreichungsformen, wie Tabletten sowie auch Pillen und Kapseln zu verstehen sind.

Die US-Patentschritt 3 357 398 offenbart eine Vorrichtung zum Überziehen von Tabletten mit einer um eine geneigte Drehachse drehbaren Trommel, deren Mantel einen zylindrischen Teil und beidseitig von diesem einen konischen Teil aufweist, wobei diese Mantel-Teile alle perforiert sind. Die Trommel ist auf der Stirnseite durch eine Wand abgeschlossen, an der eine Welle befestigt ist, die die Trommel drehbar hält und mit einer Antriebsvorrichtung verbindet. Ein Gehäuse begrenzt einen die Trommel entlang ihrem ganzen Umfang umschliessenden Hohlraum der durch Trennelemente in zwei Teilräume unterteilt ist. Beim Betrieb wird in dem sich im Bereich des Tablettenbetts befindenden Teilraum Luft in die Trommel eingeblasen und im anderen, sich über den restlichen Teil des Trommelumfangs erstreckenden Teilraum Luft abgesaugt.

Auf der der Antriebsvorrichtung abgewandten Stirnseite der Trommel besitzt diese eine Öffnung. Eine Sprühmaterialleitung und eine Druckluftleitung ragen durch das Gehäuse und die Öffnung in der Stirnseite der Trommel hindurch in diese hinein. Das Gehäuse hat neben diesen Leitungen eine mit einer Tür verschliessbare Öffnung für das Einbringen und Herausnehmen der Tabletten.

Bei dieser Vorrichtung werden also die Tabletten bei der gleichen stirnseitigen Öffnung der Trommel in diese eingebracht und wieder aus der Trommel genommen, bei der die Leitungen für das Sprühmaterial und die Druckluft in die Trommel hineinragen. Die Entnahme der Tabletten ist daher mühsam und umständlich. Diese bekannte Vorrichtung hat aber vor allem noch die für die Tabletten-Herstellung sehr wesentlichen Nachteile, dass die Trommel und die zwischen ihr und dem Gehäuse vorhandenen Teilräume, durch die Luft zu- bzw. abgeleitet wird, nicht oder nur mit grossen Zeit- und Arbeitsaufwand einwandfrei gereinigt und visuell auf ihre Sauberkeit geprüft werden können.

Aus der US-Patentschrift 3 601 086 ist eine Vorrichtung zum Überziehen von Tabletten bekannt, die ein Gestell, eine um eine horizontale Drehachse drehbare Trommel und eine Antriebseinrichtung zum Drehen der Trommel aufweist. Die Trommel ist auf ihrer einen Stirnseite mit einer zentralen Öffnung versehen. Auf der andern Stirnseite ist die Trommel abgeschlossen, durch einen angeflanschten Drehzapfen mit der Antriebseinrichtung verbunden und in dieser gelagert. Die Trommel weist einen zylindrischen, perforierten Mantel-Teil auf. Im Gestell ist im Bereich des einen, unteren Trommel-Quadranten ein Saugschuh schwenkbar gehalten, der durch einen Pneumatik-Zylinder über ein Gestänge an den perforierten Mantel-Teil der Trommel andrückbar ist. Der Saugschuh ist über ein flexibles Leitungsstück mit einem Saug-Gebläse verbunden, so dass beim Betrieb der Vorrichtung Luft aus dem Innenraum der Trommel durch den perforierten Mantel-Teil, den Saugschuh und die Leitung hindurch abgesaugt werden kann. Die zu überziehenden Tabletten werden durch die auf der einen Stirnseite der Trommel in dieser vorhandene Öffnung in die Trommel eingebracht und nach dem Aufbringen des Überzuges auch wieder durch diese Öffnung aus der Trommel entnommen.

Bei im Prinzip gemäss der US-Patentschrift 3 601 086 ausgebildeten, auf dem Markt bekannten Vorrichtungen ist ein die Trommel allseitig umschliessendes Gehäuse vorhanden und die Luft wird oben in das Gehäuse eingeleitet und dann in die Trommel eingesaugt, wobei sie zu einem grossen Teil durch die Perforation im Trommel-Mantel hindurchströmt. Im übrigen ist das Gehäuse der auf dem Markt bekannten Vorrichtungen im Bereich der auf der einen Stirnseite der Trommel in dieser vorhandenen Öffnung mit einer verschliessbaren Öffnung versehen.

Die Tabletten sammeln sich bei stillstehender Trommel in deren untersten Teil und müssen also für die Entnahme in irgend einer Weise bis zur stirnseitigen Öffnung der Trommel angehoben werden. Die Entnahme der Tabletten ist also auch bei diesen vom Markt her vorbekannten Vorrichtungen schwierig. Unter Umständen können auch die auf die Tabletten aufgebrachten Überzüge beim Herausheben der Tabletten beschädigt werden.

Bei diesen dem Markt bekannten Vorrichtungen kann die Aussenfläche der Trommel und insbesondere des perforierten Teils der Trommel-Wandung nur von aussen zugänglich gemacht werden, indem das zum grössten Teil aus verschraubten Platten gebildete Gehäuse weitgehend zerlegt wird. Bei der Verarbeitung pharmazeutischer Produkte sollten jedoch die Trommel und die sie umgebenden Raumbereiche sowie Teile einwandfrei gereinigt und visuell auf ihre Sauberkeit überprüft werden können, so dass die schwierige Zugänglichkeit der Trommel-Aussenfläche einen schwerwiegenden Nachteil bildet. Bei diesen auf dem Markt bekannten Vorrichtungen sind zudem auch noch im Gestell gelagerte Rollen vorhanden, die die Trommel abstützen und zu deren Lagerung beitragen. Diese Rollen und die den Zugang zur Trommel auf deren einen Stirnseite stark behindernde Antriebseinrichtung beeinträchtigen die Reinigbarkeit und Sauberkeitskontrolle der Trommel noch zusätzlich. Im übrigen ist das Gehäuse dieser auf dem Markt bekannten Vorrichtungen weder wassernoch gasdicht, was die Reinhaltung und Reinigung des Gehäuse-Innenraums und der Trommel ebenfalls erschwert und zudem den Nachteil hat, dass aus dem auf die Tabletten aufgesprühten Sprühmaterial stammende Lösungsmitteldämpfe in die Umgebung des Gehäuses austreten können.

Wenn die im Bereich der einen Trommel-Stirnseite im Gehäuse vorhandene, verschliessbare Öffnung für eine Inspektion des Trommel-Inhaltes während des Aufbringens eines Überzugs auf die Tabletten geöffnet wird, geschieht es zudem häufig, dass ein Schwall Luft mit einem hohen Anteil zersprühten Überzugs-Material aus der Trommel in die Umgebung austritt, was ebenfalls nachteilig ist.

Bei der Benutzung einer Vorrichtung werden manchmal relativ grosse und manchmal relativ kleine Tablettenmengen in die Trommel eingebracht. Ferner können die Tabletten in Abhängigkeit von ihrer Grösse, Form und sonstigen Beschaffenheit unterschiedliche Beweglichkeiten haben. Aus diesen Gründen kann die sich beim Rotieren ergebene Tablettenschicht von Fall zu Fall verschiedene Ausdehnungen aufweisen.

Die Saugöffnung des Saugschuhs ist in der US-Patentschrift 3 601 086 nicht näher beschrieben. Bei den gemäss dieser Patentschrift ausgebildeten, auf dem Markt bekannten Vorrichtungen ist die Saugöffnung durch feste Begrenzungen begrenzt. Wenn sich nun beim Drehen der Trommel eine Tablettenschicht ergibt, die entlang dem Trommel-Umfang gemessen eine verhältnismässig grosse Ausdehnung hat, so wird nur durch einen verhältnismässig kleinen Teil dieser Tabletten-Charge Luft hindurchgeleitet, wodurch die Wirksamkeit des Überziehvorganges reduziert wird. Wenn die Tablettenschicht umgekehrt entlang dem Trommel-Umfang nur eine verhältnismässig kleine Ausdehnung hat und sich nicht über die ganze Saugöffnung des Saugschuhs erstreckt, wird ein grosser Teil der Luft neben der Tablettenschicht hindurchgesaugt, was natürlich den Wirkungsgrad der Vorrichtung stark herabsetzt.

Die aus der US-Patentschrift 3 601 086 bekannte Vorrichtung und die genannten, auf dem Markt bekannten Vorrichtungen sind zudem ausschliesslich für einen Betrieb vorgesehen, bei dem Luft aus der Trommel in den Saugschuh hineingesaugt wird. Es hat sich nun aber gezeigt, dass diese Betriebsweise bei gewissen Anwendungen nur unbefriedigende Ergebnisse liefert.

Beim Betrieb der genannten, auf dem Markt bekannten Vorrichtungen strömt die erwärmte Luft, bevor sie zum Tablettenbett gelangt, zumindest zum grössten Teil durch die im Trommel-Mantel vorhandene Perforation in die Trommel hinein, wodurch der Trommel-Mantel und auch die mit der Warmluft in Berührung kommenden Gehäuseteile erwärmt werden. Dies verursacht Energieverluste und hat vor allem auch noch die nachteilige Folge, dass zum Aufbringen eines Überzuges mit einer zuckerhaltigen Lösung besprühte Tabletten beim Berühren des warmen Trommel-Mantels häufig an diesen anbacken. Die bekannten Vorrichtungen sind daher nicht oder nur schlecht geeignet, um Tabletten mit einem zuckerhaltigen Überzug zu versehen.

Aus der US-Patentschrift 3 834 347 ist eine Vorrichtung zum Überziehen von Tabletten bekannt, die ebenfalls eine um eine horizontale Drehachse drehbare Trommel mit einem zylindrischen Mantel aufweist. Der letztere ist zum grössten Teil lochfrei und nur bei vier parallel zur Trommel-Drehachse verlaufenden, über den Umfang der Trommel verteilten, relativ schmalen Streifen perforiert. Jeder perforierte Mantelstreifen ist mit einer an der Trommelaussenseite angebrachten Haube gegen die Umgebung abgeschlossen. Diese Hauben begrenzen vier beim Betrieb mit der Trommel mitrotierende Saugkanäle, die in einer vorgegebenen Drehstellung der Trommel über eine bei der einen Stirnseite der Trommel angeordnete Saugluftkupplung mit einer ortsfesten Saugleitung verbunden werden. Der Mantel ist zwischen zwei Saugluftkanälen mit einer zum Entnehmen der Tabletten dienenden Entnahme-Öffnung versehen, die mit einem auf die Aussenseite des Trommel-Mantels hin vorstehenden Deckel versehen ist.

Bei der Vorrichtung gemäss der US-Patentschrift 3 834 347 kann zwar die Trommel nach dem Aufbringen eines Überzuges auf die Tabletten durch die erwähnte Entnahme-Öffnung verhältnismässig gut entleert werden. Bei dieser Vorrichtung sind jedoch Saugkanäle und die Saugluftkupplung schlecht reinigbar und können praktisch auch nicht visuell auf ihre Reinheit kontrolliert werden. Dies ist für die Herstellung pharmazeutischer Produkte, wo hohe Anforderungen an die Reinheit gestellt werden, ein schwerwiegender Nachteil.

Aus der deutschen Patentschrift 1 225 035 ist eine Vorrichtung zu Kandieren von Zuckerwaren bekannt, die ein Gestell und eine um eine horizontale Achse drehbare Trommel aufweist. Die Trommel ist auf beiden Stirnseiten mit einer Öffnung versehen und weist auch im Bereich des Mantels noch eine mit einer Klappe verschliessbare Öffnung für die Entnahme des behandelten Gutes auf. An der Trommel sind zwei Laufringe angebracht, von denen jeder auf zwei gummierten, im Sockel des Gestells gelagerten Antriebsrollen abgestützt ist. Die Trommel weist also kein eigentliches Lager auf, sondern ist lediglich von den Antriebsrollen getragen. Der Trommel-Mantel weist zudem keine Perforation auf und es sind auch sonst keine Mittel vorhanden, um Luft durch ein beim Betrieb in der Trommel vorhandenes Tabletten-Bett hindurch zu saugen. Zwischen den Laufringen der Trommel, den Antriebsrollen und deren Wellen, die oben auf dem Sockel gelagert sind, wäre aber auch gar nicht genügend Platz vorhanden, um einen Saugschuh unterzubringen.

Die Erfindung hat sich nun zur Aufgabe gestellt, Nachteile der vorbekannten Vorrichtungen zu vermeiden. Dabei sollen insbesondere in der Trommel vorhandene Teilchen gut und mit geringem Zeitaufwand aus der Trommel und dem diese umschliessenden Gehäuse entnehmbar sein.

Diese Aufgabe wird ausgehend von einer der erwähnten, vom Markt her bekannten, im Prinzip gemäss der US-Patentschrift 3 601 086 ausgebildeten Vorrichtungen durch eine Vorrichtung gemäss dem Oberbegriff des Anspruch 1 gelöst, wobei die Vorrichtung nach der Erfindung durch die Merkmale des Anspruchs 1 gekennzeichnet ist.

Vorteilhafte Ausgestaltungen der Erfindung ergeben sich aus den abhängigen Ansprüchen.

Die Trommel kann im Gehäuse um eine mit einer Vertikalen einen Winkel bildende, vorzugsweise horizontale Drehachse drehbar sein.

Die Trommel weist vorzugsweise auf einer Stirnseite eine zentrale Öffnung auf, durch die mit Gasleitmitteln Gas, insbesondere Luft, in die Trommel hinein oder eventuell aus dieser heraus geleitet werden kann, so dass mindestens im wesentlichen nur durch diese zentrale Öffnung und den sich momentan gerade beim Gas-Übertragungsschuh befindenden Abschnitt des mindestens teilweise perforierten Mantel-Teils der Trommel Gas in diese einströmt und aus dieser ausströmt. Ferner kann noch ein Düsenhalter mit Düsen durch diese stirnseitige Öffnung der Trommel in diese hineinragen. Bei einer vorteilhaften Ausführungsform der Vorrichtung ist die Trommel auch noch auf ihrer anderen Stirnseite mit einer Öffnung versehen. Diese kann dazu dienen, die Trommel zum Reinigen und zur Überprüfung auf ihre Sauberkeit besser zugänglich zu machen und/oder das Anordnen einer automatischen Teilchen-Beschickungsvorrichtung zu ermöglichen, die durch diese Öffnung hindurch ein wenig in die Trommel hinein ragt.

In der Stammanmeldung 82901494.3 (Veröffentlichung EP-A-0 079 348) und in der Teilanmeldung 84103341.3 (Veröffentlichung EP-A-0 137 150) sind Ausführungsbeispiele beschrieben, die mit denjenigen in dieser Patentschrift übereinstimmen.

Der Erfindungsgegenstand soll nun anhand eines in der Zeichnung dargestellten Ausführungsbeispiels und Varianten davon erläutert werden. In der Zeichnung zeigen

Fig. 1 eine Frontansicht einer Vorrichtung zum Überziehen von Tabletten, wobei die seitlichen Klappdeckel des Gehäuses aufgeklappt sind,

Fig. 2 eine Seitenansicht der Vorrichtung in etwas kleinerem Massstab, wobei aber die beiden Klappdeckel des Gehäuses im Gegensatz zur Darstellung in der Fig. 1 zugeklappt sind,

Fig. 3 einen Grundriss der Vorrichtung im gleichen Massstab wie die Fig. 2, mit zugeklappten Klappdeckeln,

Fig. 4 einen etwas schematisierten Vertikalschnitt entlang der Linie IV-IV der Fig. 1, aber mit zugeklappten Klappdeckeln und in grösserem Massstab,

Fig. 5 einen Einblick in das Gehäuse bei aufgeklapptem Klappdeckel in horizontaler, zur Trommel-Drehachse rechtwinkliger Blickrichtung mit einer Draufsicht auf den Übertragungsschuh und einen Teil der Trommel, in grösserem Massstab,

Fig. 6 eine von der rechten Seite der Fig. 5 her gesehene Draufsicht auf den Übertragungsschuh und einen Teil der Trommel,

Fig. 7 einen Ausschnitt aus der Vorrichtung mit einer Draufsicht auf die eine Trommel-Stirnseite und das an dieser angeordnete pneumatische Verstellorgan, wobei die Entnahme-Öffnung der Trommel und die Öffung des auch noch angedeuteten Gehäuse-Bodens geschlossen sind,

Fig. 8 einen der Fig. 7 entspechenden Ausschnitt, wobei jedoch die Entnahme-Öffnung der Trommel und die Öffnung des Gehäuse-Bodens offen sind, und

Fig. 9 eine Variante eines Verschluss-Elementes zum Verschliessen der Öffnung des Gehäuse-Bodens.

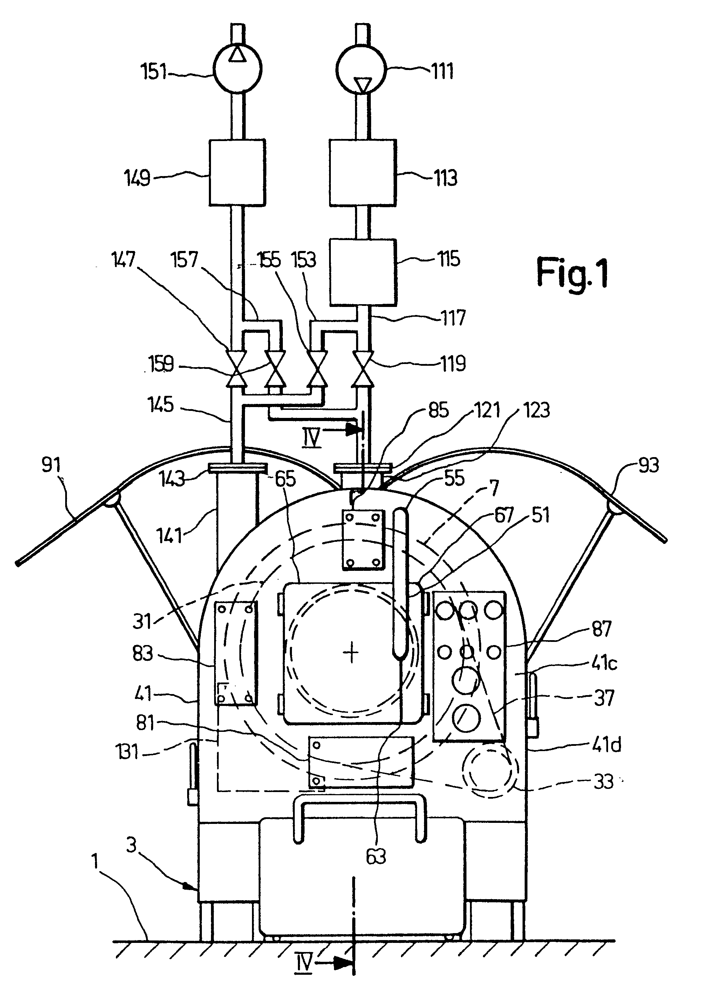

Die in den Figuren 1 bis 4 dargestellte Vorrichtung zum Überziehen von Tabletten weist ein auf dem Boden 1 eines Raumes stehendes Gestell 3 auf, das mindestens zum Teil aus miteinander verschweissten Profilstäben gebildet ist. Im Gestell 3 ist eine Trommel 17 um eine horizontale Drehachse 5 drehbar gelagert.

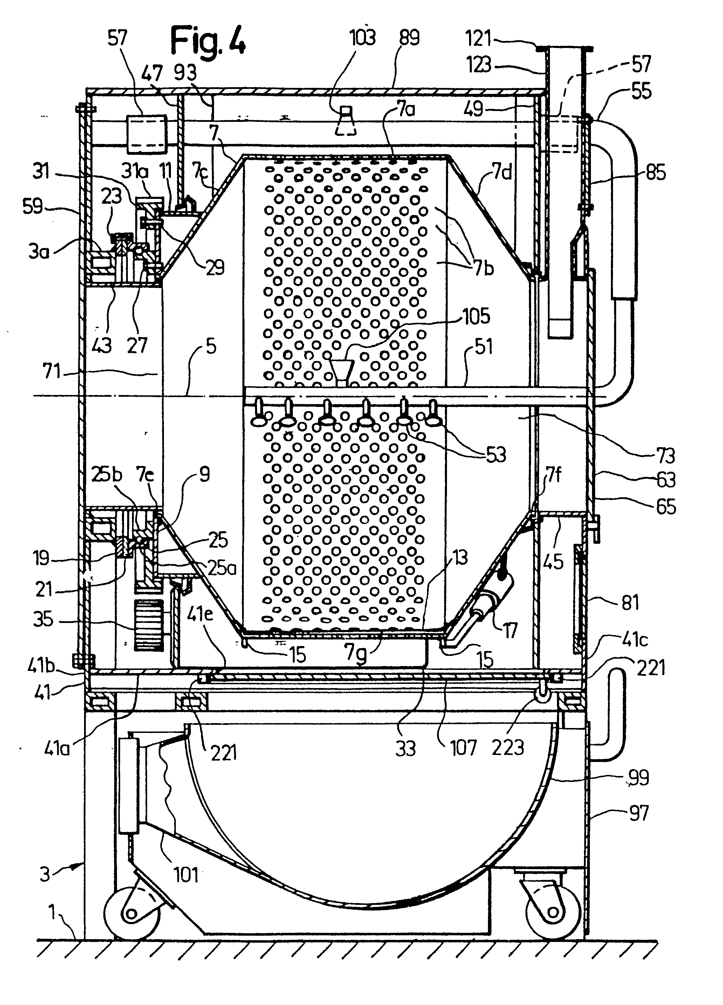

Die Wandung der im wesentlichen zur Drehachse 5 rotationssymmetrischen Trommel 7 weist im mittlerem Teil einen kreiszylindrischen Wand-bzw. Mantel-Teil 7a auf. Dieser ist, wie es aus der Fig. 4 ersehbar ist, mit einer durch Löcher 7b, nämlich Bohrungen gebildeten Perforation versehen, wobei die Löcher 7b zur Verdeutlichung in übertriebener Grösse gezeichnet sind. Die Perforations- Löcher 7b sind gleichmässig über den Umfang des kreiszylindrischen Mantel-Teils 7a verteilt. Hingegen ersteckt sich die Perforation nicht über die ganze parallel zur Drehachse 5 gemessene Abmessung des kreiszylindrischen Mantel-Teils 7a, so dass dieser beidseitig der Perforation noch eine ungelochte Ringfläche aufweist. An den kreiszylindrischen Mantel-Teil 7a schliesst beidseitig ein sich konisch verjüngender, ungelochter Wand-Teil 7c bzw. 7d an. An die dünneren Enden der konischen Trommel-Wand-Teile 7c und 7d schliesst ein kleiner zylindrischer Rand 7e bzw. 7f an. Am Rand 7e ist ein von diesem weg radial nach aussen ragender Ring 9 starr befestigt, nämlich angeschweisst. Dieser ist an seinem äussern Rand durch einen zylindrischen Ring 11 zusätzlich mit dem Wand-Teil 7c verbunden, wobei der Ring 11 ebenfalls durch Schweissverbindungen befestigt ist.

Der Mantel-Teil 7a ist mit einer Entnahme-Öffnung 7g zum Entnehmen der Tabletten versehen. Diese Öffnung 7g erstreckt sich über die ganze, parallel zur Drehachse 5 gemessene Abmessung des Mantel-Teils 7a bis in die Wand-Teile 7c, 7d hinein und ist mit einem Verschluss-Element 13 abschliessbar, das mit Scharnieren 15 um eine zur Drehachse 5 parallele Schwenkachse schwenkbar mit der Trommel verbunden ist. Das Verschluss-Element 13 ist beispielsweise ebenfalls perforiert und seine Aussenfläche geht in der Schliess-Stellung, wenn man von den sich bei den Rändern des Mantel-Teils 7a befindenen Scharnieren absieht, glatt und stetig in die Aussenfläche des restlichen Mantel-Teils 7a über. Wie noch näher erläutert wird, kann das Verschluss-Element 13 mittels mindestens eines an der Trommel montierten, pneumatischen Verstellorgans 17 wahlweise in der Schliess-Stellung gehalten oder geöffnet werden. Im Innern der Trommel 7 können im übrigen an dieser befestigte, nicht dargestellte Schaufeln zum Mitnehmen der Tabletten vorhanden sein.

Das Gestell 3 weist unter anderem ein sich in der Fig. 4 auf der linken Seite befindendes Joch 3a auf, dessen oberster Teil einen vertikal angeordneten, viereckigen Rahmen bildet. An diesen ist ein Ring 19 befestigt, nämlich angeschweisst. An diesem ist mittels Schrauben 23 der eine Ring 25a eines Lagers 25 lösbar und starr befestigt, wobei zwischen dem Ring 19 und dem Lager-Ring 25a noch ein Distanz-Ring 21 angeordnet ist. Der bezüglich des Rings 25a drehbare Ring 25b des Lagers 25 ist mit Schrauben 27 lösbar und starr am Ring 9 befestigt. Zwischen den beiden Lager-Ringen sind Rollkörper angeordnet. Das Lager 25 ist also als Wälzlager, beispielsweise Kugellager, ausgebildet und dient sowohl zur radialen als auch zur axialen Lagerung der Trommel 7. Die letztere ist ausschliesslich durch das sich auf einer Seite des zylindrischen, perforierten Mantel-Teils 7a bei ihrer einen Stirnseite befindende Lager 25 gelagert. Im übrigen sind die beiden Lager-Ringe 25a, 25b beidseits der Rollkörper, d.h. Kugeln durch je eine nicht dargestellte Lippen-Dichtung gegeneinander abgedichtet, so dass kein Schmiermittel aus dem Lager austreten kann.

Am äussern Rand des Ringes 9 ist mittels Schrauben 29 ein Zahn-Ring 31 mit einer Verzahnung 31a starr und lösbar befestigt. Eine einen pneumatischen oder elektrischen Motor und ein Getriebe aufweisende Antriebsvorrichtung 33 ist am Gestell 3 befestigt, und zwar auf der einen Seite einer durch die Trommel-Drehachse 5 verlaufenden Vertikalebene ungefähr in der Höhe des tiefsten Teils der Trommel-Wandung. Die Antriebsvorrichtung 33 weist ein Zahnrad 35 auf, das über einen Zahnriemen 37, der in der Fig. 4 weggelassen wurde, mit dem Zahn-Ring 31 in Winkverbindung steht.

Im übrigen sei noch bemerkt, dass die durch die Schrauben 23, 27 und 29 miteinander verbundenen Ringe jeweils zusätzlich zu den Schrauben noch durch satt passende Stifte drehfest miteinander verbunden sein können.

Die Vorrichtung weist ein am Gestell 3 befestigtes, als Ganzes mit 41 bezeichnetes Gehäuse auf, das aus einem etwas unter der Trommel 7 und der Antriebsvorrichtung 33 angeordneten Boden 41a, zwei Stirnwänden 41b, 41c und einem U-förmigen Wand-Teil 41d gebildet ist, der zwei Seitenwände und eine gebogene, in diese übergehende Deckwand bildet. Das Gehäuse 41 schliesst die sich darin befindende Trommel 5 staubdicht sowie mindestens einigermassen und vorzugsweise vollkommen gasdicht gegen die Umgebung ab. Der Boden 41a fällt beispielsweise von einer parallel zur Drehachse 5 verlaufenden Mittellinie weg auf beide Seiten hin leicht ab. Auf den beiden Gehäuse-Stirnwänden 41b, 41c ist an diesen oder direkt am Gestell 3 je ein zur Drehachse 5 koaxialer, im wesentlichen kreiszylindrischer Stutzen 43 bzw. 45 befestigt. Der Stutzen 43 ist geringfügig dünner als die von der Innenfläche des Trommel-Randes 7e begrenzte Öffnung und ragt mit etwas Spiel ein wenig in diese hinein. Der Stutzen 45 hat ungefähr den gleichen Durchmesser wie der Trommel-Rand 7f und stösst annähernd an diesen an. Das Gehäuse 41 weist zwei rechtwinklig zur Drehachse 5 verlaufende Zwischenwände 47 und 49 auf, die sich im Bereich des Ringes 11 bzw. der Stoss-Stelle zwischen dem Trommel-Rand 7f und dem Stutzen 45 befinden. Ein grosser Teil der Trommel 7 und insbesondere deren perforierter Mantel-Teil 7a befindet sich also in einer durch die beiden Zwischenwände 47, 49 begrenzten Kammer des Gehäuse-Innenraumes. Die beiden Zwischenwände 47, 49 sind mit Öffnungen für die Stutzen 43 bzw. 45 versehen, wobei bei diesen Öffnungen den Stutzen 43 bzw. die erwähnte Stoss-Stelle umschliessende Ringe an ihnen befestigt sind. Am Ring 11 bzw. am Trommel-Wand-Teil 7d sind ebenfalls noch Ringe befestigt, die die an den Zwischenwänden 47, 49 befestigten Ringe vom mittleren Teil der Trommel 7 her übergreifen, mit diesen zusammen eine Labyrinth-Dichtung bilden und die in den Zwischenwänden 47, 49 vorhandenen Öffnungen spritzwasserdicht abschliessen. Im übrigen ist die Antriebsvorrichtung 33 teils durch die Zwischenwand 47 und teils durch eine nicht besonders dargestellte Verschalung flüssigkeitsdicht gegen die zwischen den Zwischenwänden 47, 49 vorhandene Kammer des Gehäuse-Innenraums abgeschlossen.

Ein Düsenhalterrohr 51, an dem eine Anzahl Sprühdüsen 53 zum Zersprühen des Überzugsmaterials befestigt sind, ragt durch den Stutzen 45 hindurch in die Trommel 7 hinein. Der bei der Stirnwand 41c aus dem Gehäuse 41 herausragende Teil des Rohres 51 ist nach oben abgebogen und mit einem ebenfalls abgebogenen Rohr 55 verbunden, das einen Teil eines oberhalb der Trommel 7 in Führungen 57 parallel zur Drehachse 5 geführten Teleskopauszuges bildet. Der letztere ist bei der Stirnwand 41b mit einem Flansch-Anschluss zum Anschliessen einer Zuleitung für das zu zersprühende Material versehen und im übrigen derart ausziehbar, dass das Düsenhalterrohr 51 für Reinigungs- und Revisionsarbeiten vollständig aus der Trommel 7 und dem Stutzen 45 herausgezogen werden kann.

Die Stirnwand 41b ist mit einer Öffnung versehen, die mit einem Verschluss-Element 59, das durch eine schwenk- und verschliessbare Türe oder eventuell eine lösbar befestigte Platte gebildet ist, mindestens einigermassen gasdicht abschliessbar ist. Das Verschluss-Element 59 liegt in seiner in der Fig. 4 dargestellten Schliess-Stellung insbesondere auch einigermassen dicht am Stutzen 43 an.

Die Stirnwand 41c ist im Bereich des Stutzens 45 mit einer Öffnung versehen, die durch ein Verschluss-Element 63 verschliessbar ist, das durch zwei verriegelbare Türflügel 65, 67 gebildet ist. Die beiden Türflügel 65, 67 überlappen einander in der Schliess-Stellung im Bereich des aussermittig angeordneten Düsenhalterrohres 51 und sind je mit einer von diesem durchdrungenen, abgedichteten Ausnehmung versehen.

Der Rand 7e der Trommel-Wandung begrenzt auf der lagerungsseitigen Trommel-Stirnseite zusammen mit dem in ihn hineinragenden Stutzen 43 eine kreisrunde, zentrale, d.h. zur Drehachse 5 koaxiale Öffnung 71. Ferner begrenzt der Rand 7f der Trommel-Wandung zusammen mit dem ungefähr mit ihm fluchtenden Stutzen 45 auf der dem Kugellager 25 abgewandten Trommel-Stirnseite eine zur Drehachse 5 koaxiale Öffnung 73. Wenn die Verschluss-Elemente 59, 63 entfernt bzw. geöffnet sind, ist das Innere der Trommel 7 durch diese zwei Öffnungen 71, 73 von dem das Gehäuse 41 umgebenden Aussenraum her zugänglich. Die lichten Weiten, d.h. die Durchmesser der Öffnungen 71, 73 betragen mindestens 25% und vorzugsweise mindestens 40% des maximalen Aussendurchmessers der Trommel 7, d.h. des Aussendurchmessers des Mantel-Teils 7a. Ferner betragen die lichten Weiten oder Durchmesser der Öffnungen 71, 73 mindestens 300 mm und zweckmässigerweise mindestens 450 mm. Der Aussendurchmesser der Trommel 7 kann beispielsweise 1250 mm betragen und die Durchmesser der Öffnungen 71, 73 können dann in der Grösse von 600 mm liegen.

An der Stirnwand 41c sind noch andere Öffnungen vorhanden, die durch mit Schrauben oder Schnappelementen lösbar befestigen Abdeck-Platten 81, 83, 85 dicht verschliessbar sind. Ferner ist an der Stirnwand 41c noch ein Schalt-Tableau 87 mit verschiedenen Anzeigeinstrumenten und Bedienungselementen angeordnet.

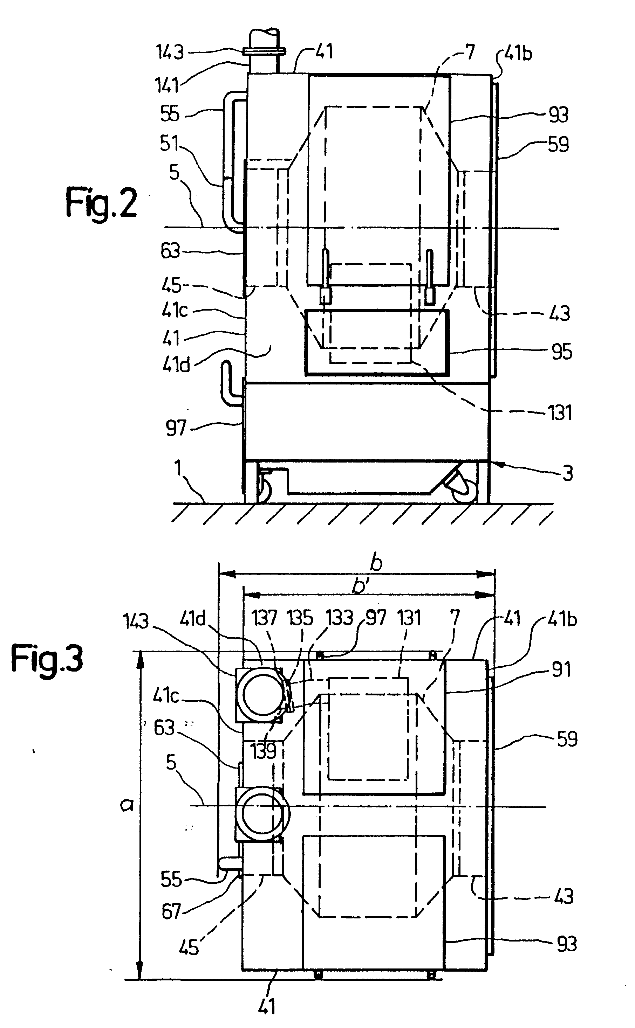

Der First des Gehäuses 41 ist durch eine Metall-Leiste 89 gebildet. An dieser sind mittels Scharnieren auf beiden Seiten der durch die Drehachse 5 verlaufenden Vertikalebene Klappdeckel 91, 93 befestigt. Diese können von einer in den Figuren 2 und 3 dargestellten Schliess-Stellung, in der sie verriegelt sind und im Wandteil 41d vorhandene Öffnungen abschliessen, nach oben in die in der Fig. 1 dargestellte Öffnungs-Stellung geklappt und mit Stützen abgestützt werden. Der Wandteil 41d ist unterhalb des Klappdeckels 93 noch mit einer andern Öffnung versehen, die durch eine lösbar befestigte Abdeck-Platte 95 verschlossen ist.

Im Boden 41a des Gehäuses 41 ist ebenfalls eine Öffnung 41e vorhanden. Diese ist mit einem in der Fig. 4 in der Schliess-Stellung gezeichneten Verschluss-Element 107 verschliessbar, dessen Ausbildung noch näher erläutert wird. Das Gestell 3 ist derart ausgebildet, dass zwischen dem Fussboden 1 und dem Gehäuse-Boden 41a ein Raum frei bleibt, in den ein Wagen 97 eingestellt werden kann, der einen Handgriff, einen schalen- oder trogförmigen, oben offenen Behälter 99 und einen mit diesem verbunden, absperrbaren Auslass 101 aufweist.

Im Innern des Gehäuses 41 sind Düsen zum Zersprühen von Wasser oder einer andern Reinigungsflüssigkeit angeordnet, von denen in der Fig. 4 eine dargestellt und mit 103 bezeichnet ist. Des weitern ist auch im Innern der Trommel 7 am Düsenhalterrohr 51 mindestens eine Düse 105 zum Zersprühen der Reinigungsflüssigkeit angeordnet. Die Düsen 103, 105 sind über nicht dargestellte Leitungen mit einer eine Pumpe aufweisenden Reinigungsflüssigkeitsquelle verbunden.

Ein zum Zuführen von Luft dienendes Gebläse 111 ist über ein Filter 113, ein Heizorgan 115 und eine Leitung 117, in die ein Absperrorgan 119 eingeschaltet ist, mit dem Anschluss 121 einer Leitung 123 verbunden, die von der Oberseite des Gehäuses 41 her durch dieses hindurch in den Stutzen 45 einmündet. Ein Luft- oder Gas-Übertragungsschuh 131 ist im Innern des Gehäuses 41 angeordnet, und zwar bezüglich der Drehachse 5 in demjenigen unteren Quadranten, der sich in der Fig. 1 auf der linken Seite der durch die Drehachse 5 verlaufenden Vertikalebene befindet. Der Übertragungsschuh 131 ist, wie noch näher erläutert wird, rechtwinklig zur Drehachse 5 verschiebbar geführt. Der Übertragungsschuh 131 kann von seiner in den Figuren 1 und 3 dargestellten Betriebs-Stellung, in der er dicht am Mantel-Teil 7a der Trommel 7 anliegt, manuell in eine andere, für die Reinigung vorgesehene Endstellung verschoben werden, in der er durch einen Zwischenraum von der Trommel 7 getrennt ist. Die parallel zur Drehachse 5 gemessene Breite des Übertragungsschuhs 131 ist mindestens gleich der entsprechenden Ausdehnung des perforierten Abschnittes des Mantel-Teils 7a, wobei aber der Übertragungsschuh derart bemessen ist, dass die Scharniere 15 beim Drehen der Trommel 7 beidseitig von ihm passieren können.

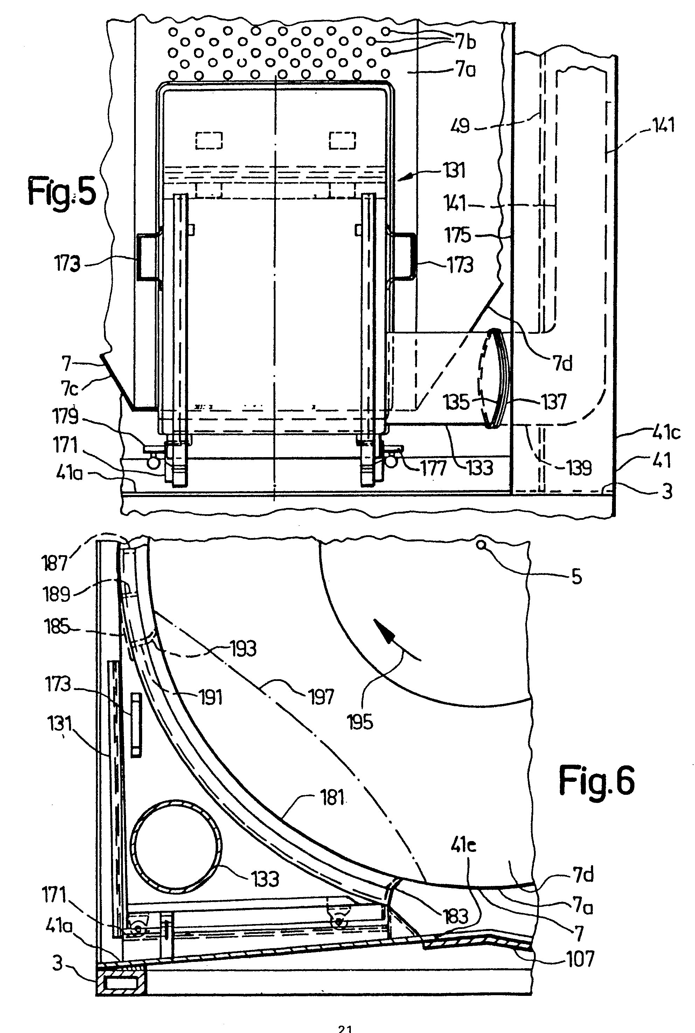

Am Übertragungsschuh 131 ist ein besonders deutlich in der Figuren 5 und 6 ersichtliches, leicht abgewinkeltes, im allgemeinen ungefähr in der Richtung der Drehachse 5 verlaufendes, starres Leitungsstück 133 starr befestigt. Dieses ist an seinem dem Übertragungsschuh 131 abgewandten Ende mit einem starr an ihm befestigten, ringförmigen Kupplungsstück 135 versehen. Ein anderes, ringförmiges Kupplungsstück 137 ist starr an einem starren Leitungsstück 139 befestigt, das seinerseits starr am Gehäuse 41 und damit am Gestell 3 befestigt ist. Das Leitungsstück 139 mündet in eine Leitung 141, die vertikal nach oben verläuft, oben aus dem Gehäuse 41 herausragt und dort mit einem Anschluss 143 versehen ist. Wenn sich der Übertragungsschuh 131 in seiner Betriebs-Stellung befindet, liegen die beiden ringförmigen Kupplungsstücke 135, 137 bei einer Berührugs-Ebene aneinander an, die vertikal verläuft und ferner mit der Verschieberichtung des Übertragungsschuhs einen gewissen Winkel bildet, der zweckmässigerweise höchstens 45° beträgt. Die Berührungs-Ebene steht dabei derart, dass die Kupplungsstücke 135, 137 durch eine von der Trommel weggerichtete Verschiebung des Übertragungsschuhs 131 getrennt werden können. Zweckmässigerweise ist mindestens eines der beiden Kupplungsstücke 135, 137 mit einem elastisch deformierbaren Dichtungsring versehen.

Wenn der Übertragungsschuh 131 seine in den Figuren 1 und 3 dargestellte Betriebs-Stellung einnimmt, ergeben die Kupplungsstücke 135, 137 eine dichte Verbindung zwischen den Leitungsstücken 133 und 139. Wenn dagegen der Übertragungsschuh 131 ausgehend von seiner Betriebs-Stellung von der Trommel weg nach aussen verschoben wird, werden die Kupplungsstücke 135, 137 voneinander getrennt und damit der Übertragungsschuh gasmässig vom Leitungsstück 139 entkuppelt.

Im übrigen sei noch bemerkt, dass lösbare Spannmittel vorgesehen werden können, um die beiden Kupplungsstücke 135, 137 in der Betriebs-Stellung zu übergreifen und gegeneinander zu ziehen. Die Spannmittel wären dabei derart ausgebildet, dass sie mit wenigen Handgriffen, etwa durch Verschwenken eines Hebels, von einer Spann-Stellung, in der die Kupplungsstücke 135, 137 gegeneinander ziehen, in eine Freigabe-Stellung bringbar sind, in der die Kupplungsstücke durch Verschieben des Übertragungsschuhs voneinander trennbar sind.

Der Anschluss 143 ist über eine Leitung 145, in die ein Absperrorgan 147 eingeschaltet ist, und ein Filter 149 mit einem Saug-Gebläse 151 verbunden. Die Leitungen 117 und 145 sind durch die Absperrorgane 119 und 147 kreuzweise überbrückende Leitungen 153, 157 miteinander verbunden, in die ebenfalls je ein Absperrorgan 155 bzw. 159 eingeschaltet ist. Die Absperrorgane 119, 147, 155, 159 weisen einen durch eine sogenante Lüftungsklappe absperrbaren Durchgang auf. Im übrigen sei darauf hingewiesen, dass die Gebläse 111, 151, die Filter 113, 149, das Heizorgan 115 und die Absperrorgane 119, 147, 155, 159 entgegen der nur schematischen Darstellung in der Fig. 1 nicht oberhalb des Gehäuses 41 angeordnet sein müssen, sondern irgendwo, aber vorzugsweise ausserhalb des Gehäuses 41 angeordnet sein können. Es sei auch bemerkt, dass die Leitungen 153 und 157 mitsamt den Absperrorganen 155, 159 wegfallen können, womit dann auch die in die Leitungen 117 und 145 eingeschalteten Absperrorgane 119 und 147 unnötig werden.

Nun soll anhand der Figuren 5 und 6 die Ausbildung des Luft- oder Gas-Übertragungsschuhs 131 näher erläutert werden.

Auf der oberen Seite des an einem horizontalen Rahmen des Gestells 3 befestigten Bodens 41a ist ei-

ne Führung 171 angeordnet, die beispielsweise in der Art eines Schubladenauszuges ausgebildet ist und am Gehäuse 41 oder direkt am Gestell 3 befestigte Schienen aufweist, die rechtwinklig zur Trommel-Drehachse verlaufen und entweder horizontal angeordnet oder von der Trommel weg bezüglich einer Horizontalebene leicht nach unter oder oben geneigt sind. Auf diesen Schienen ist mit Rollen oder Gleitflächen ein Schlitten verschiebbar geführt, der seinerseits Laufbahnen aufweist, auf denen wiederum mit Rollen oder Gleitflächen der Übertragungsschuh 131 verschiebbar geführt ist. Der letztere ist mit Handgriffen 173 versehen, die, wenn der Klappdeckel 91 aufgeklappt ist, durch die im Gehäuse 41 vorhandene Öffnung 175 von aussen her gefasst werden können. Dadurch kann der Übertragungsschuh 131 in der bereits erwähnten Weise von seiner in den Figuren 1, 3 sowie auch 5 und 6 dargestellten Betriebs-Stellung von der Trommel weg bis zu einem Anschlag in seine andere, ebenfalls bereits erwähnte Reinigungs-Endstellung verschoben werden. Ferner sind manuell betätigbare Arretierorgane 117, 179 vorhanden, die beispielweise einen federbelasteten, selbsttätig einrastenden und wieder manuell lösbaren Bolzen oder einen etwa am Übertragungsschuh angeordneten, manuell hin- und herschwenkbaren Riegel aufweisen und mit denen der Schlitten und/oder der Übertragungsschuh 131 mindestens in der Betriebs-Stellung und eventuell auch in der Reinigungs-Endstellung arretiert werden kann. Der Verschiebe-Weg zwischen den beiden Endstellungen beträgt mindestens 30 cm und beispielsweise ungefähr 50 cm, so dass sich in der Reinigungs-Endstellung zwischen der Trommel 7 und dem Übertragungsschuh ein entsprechend grosser Zwischenraum ergibt. Der Übertragungsschuh 131 kann in der Reinigungs-Endstellung auch vom Schlitten abgehoben und vollständig von der restlichen Vorrichtung getrennt werden.

Der Übertragungsschuh 131 ist im wesentlichen als hohler Kasten ausgebildet, dessen auf seiner in der Betriebs-Stellung dem Mantel-Teil 7a der Trommel 7 zugewandte Seite eine zur Trommel-Drehachse koaxialde Form aufweist. Der Übertragungsschuh 131 ist im Bereich seiner der Trommel zugewandten Seite offen, oder hat, anders gesagt, auf dieser Seite eine mit seinem Hohlraum in Verbindung stehende Mündungsöffnung. Diese Mündungsöffnung wird auf zwei einander abgewandten Seiten durch je eine Dichtung 181 begrenzt, die einen zur Trommel-Drehachse koaxialen Kreisbogen bildet. In der Betriebs-Stellung liegt jede der beiden Dichtung 181 an einem der lochfreien Randabschnitte des Mantel-Teils 7a an. Am untern Ende der Mündungsöffnung wird diese durch eine zur Trommel-Drehachse parallel verlaufende Dichtung 183 begrenzt. In den oberen Teil des Übertragungsschuhs 131 ist eine bogenförmige, zur Trommel-Drehachse koaxiale Platte 185 eingesetzt. Diese ist bei ihrem oberen Rand sowie bei ihren beiden Seitenrändern gasdicht mit der Wandung des Übertragungsschuhs verbunden. Auf der der Trommel 7 zugewandten Seite der Platte 185 sind drei Dichtungs-Halter 187, 189, 191 befestigt. Diese sind auf einem um die Trommel-Drehachse 5 herum verlaufenden Kreisbogen gegeneinander versetzt und haben im übrigen etwa die Form U-förmiger, gegen die Trommel hin offener Rinnen. Eine Dichtung 193 kann wahlweise in einen dieser Dichtungs-Halter eingesetzt werden, beispielsweise wie in der Fig. 6 dargestellt, in den untersten Dichtungs-Halter 191. Diese parallel zur Drehachse 5 verlaufende, versetzbare Dichtung 193 bildet die obere Begrenzung der Mündungsöffnung des Übertragungsschuhs, ist wie die andern Dichtungen 181, 183 elastisch deformierbar, streifenförmig sowie mit einer der Trommel zugewandten Lippe versehen und liegt in der Betriebs-Stellung des Übertragungsschuhs 131 wie die andern Dichtungen 181, 183 dicht an der Trommel an. Im übrigen stossen die Enden der vier Dichtungen 181, 183, 193 dicht aneinander an, wobei die Dichtungen 181, 183 auch zusammenhängend sein können, so dass also der Innenraum des Übertragungsschuhs in dessen Betriebs-Stellung über die Mündungsöffnung mindestens einigermassen gasdicht mit der Trommel verbunden wird.

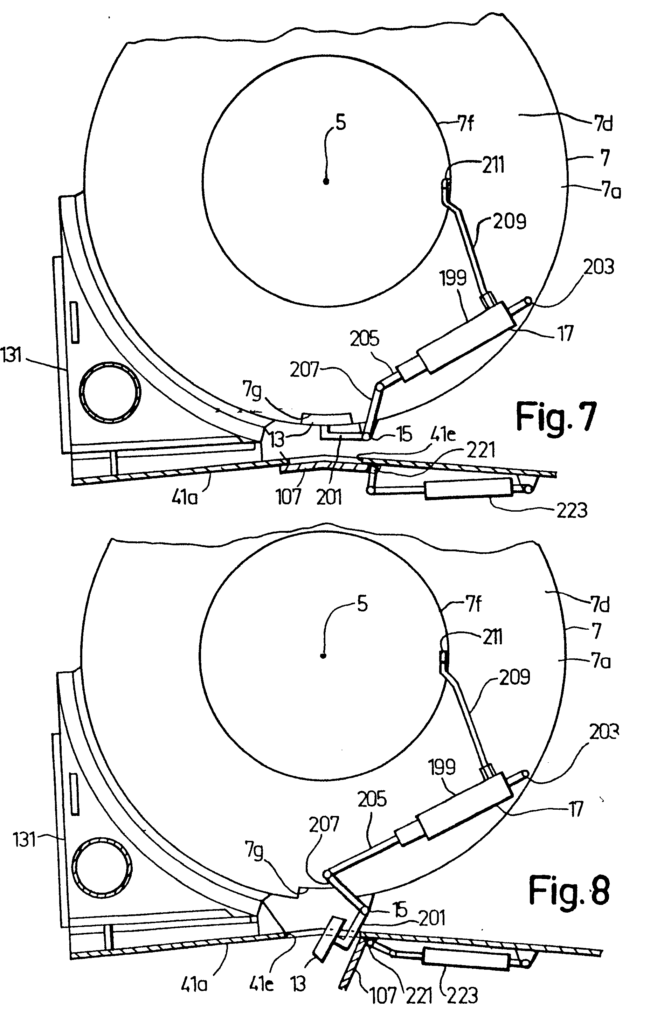

Nun soll anhand der Figuren 7 und 8 die Ausbildung der Verschluss-Elemente 13 und 107 und ihrer Betätigungsmittel näher erläutert werden.

Die beiden Scharniere 15 sind auf verschiedenen Seiten der Perforation des Mantel-Teils 7a ausserhalb dieser Perforation angeordnet und beispielsweise an den beiden lochfreien Randstreifen des Mantel-Teils 7a befestigt, wobei sich die Scharnier-Schwenkachse auf der Aussenseite des Wand-Teils 7a befindet. Das Verschluss-Element 13 ist an seinen beiden Enden mit je einem Winkelhebel 201 an den Scharnieren gelagert. Das pneumatische Verstellorgan 17 weist einen Zylinder 199 auf, der bei einem Ende mit einem Gelenk 203 am konischen Wand-Teil 7d der Trommel 7 angelenkt ist, wobei die Schwenkachse des Gelenkes 203 gleich wie diejenige der Scharniere 15 parallel zur Trommel-Drehachse 5 verläuft. Im Zylinder 199 ist ein Kolben 205 geführt, dessen Schaft über einen Kurbelarm 207 mit dem Bolzen des betreffenden Scharniers 15 verbunden ist, der seinerseits drehfest mit dem Winkelhebel 201 verbunden ist.

Der Zylinder 199 enthält ferner eine am Kolben 205 angreifende Druckfeder, die den Kolben bei druckluftlosem Zylinder gegen diejenige Endstellung drückt, in der dieser das Verschluss-Element 13 in seiner in den Figuren 4 und 7 dargestellten Schliess-Stellung hält. Nötigenfalls kann eine Dichtung vorgesehen werden, die das Verschluss-Element 13 in der Schliess-Stellung gegen den Mantel-Teil 7a abdichtet.

An den Druckluft-Anschluss des Zylinders 199 ist eine Druckluft-Leitung 209 angeschlossen, deren Hauptteil entlang der Aussenseite des Wand-Teils 7d verläuft und deren dem Pneumatik-Zylinder abgewandtes Ende beim Rand 7d auf dessen Innenseite geführt ist und ein Druckluft-Kupplungsstück 211 aufweist. Eine ortsfeste, nicht dargestellte Druckluftquelle ist über mindestens ein Ventil, das beim Schalt-Tableau 87 angeordnet oder von diesem aus betätigbar ist, und eine mindestens zum Teil am Gestell 3 oder Gehäuse 41 gehaltene Druckluft-Leitung mit einem anderen Druckluft-Kupplungsstück verbunden. Wenn die Trommel 7 rotiert, ist das Kupplungstück 211 mit einer Halterung an der Trommel 7 und das andere erwähnte Kupplungsstück mit einer Halterung am ortsfesten Gestell 3 oder Gehäuse 41 befestigt. Eines der beiden Kupplungsstücke ist manuell von der Halterung lösbar oder mindestens verstellbar, so dass die beiden Kupplungstücke lösbar miteinander verbunden werden können, wenn die Trommel 7 in der in die Figuren 4, 7 und 8 dargestellten Drehstellung steht und die Türflügel 65, 67 geöffnet sind. Wenn die beiden Kupplungsstücke miteinander verbunden sind, kann der Zylinder 199 des Verstellorgans 17 durch Betätigen eines Ventils mit Druckluft beaufschlagt werden, wodurch das Verschluss-Element 13 ausgehend von seiner Schliess-Stellung nach unten in seine in der Fig. 8 dargestellte Freigabe-Stellung verschwenkt wird und bis zum Entlüften des Zylinders in dieser bleibt.

Das Verschluss-Element 13 kann also nur dann geöffnet werden, wenn die beiden Druckluft-Kupplungsstücke miteinander verbunden sind. Im übrigen weist die elektrisch-pneumatische Steuereinrichtung der Vorrichtung zweckmässigerweise Schaltungsmittel auf, die gewährleisten, dass die Antriebsvorrichtung 33 der Trommel nur dann in Betrieb gesetzt werden kann, wenn sich das Verschluss-Element 13 in seiner Schliess-Stellung befindet und die genannten Druckluft-Kupplungsstücke voneinander getrennt sind. Diese Schaltungsmittel können beispielsweise einen Endschalter aufweisen, der in das mit dem Kupplungsstück 211 verbindbaren Kupplungsstück eingebaut ist und der beim Verbinden der beiden Kupplungsstücke seinen Schaltzustand ändert und ein elektrisches Schütz oder ein Ventil steuert, so dass die Speisung des elektrischen oder pneumatischen Motors der Antriebsvorrichtung 33 unterbrochen wird.

Ferner sind zweckmässigerweise ein im Schalt-Tableau 87 angeordnetes, manuell betätigbares Stop-Schaltorgan und weitere Steuermittel vorhanden, die ermöglichen, dass die rotierende Trommel durch Betätigen des Stop-Schaltorgans in der in den Figuren 4, 7 und 8 dargestellten Dreh-Stellung gestoppt wird. In dieser für die Entleerung der Trommel, d.h. die Entnahme der Tabletten vorgesehene Entleerungs- oder Entnahme-Drehstellung befinden sich die Entnahme-Öffnung 7g und das Verschluss-Element 13 ungefähr bei der untersten Stelle der Trommel 7, oder genauer gesagt, des Mantel-Teils 7a. Die Entnahme-Öffnung 7g kann in der Entnahme-Drehstellung, wie in den Figuren 7 und 8 gezeichnet, symmetrisch zu einer Vertikalebene durch die Trommel-Drehachse sein. Die Entnahme-Öffnung sollte aber nicht in den Bereich des Gas-Übertragungsschuhs 131 hineinragen und kann daher je nach der Ausdehnung des letztern und ihrer eigenen Ausdehnung in der Entnahme-Drehstellung etwas asymmetrisch zur genannten Vertikalebene angeordnet und gegen den dem Übertragungsschuh 131 abgewandten, unteren Trommel-Quadranten hin versetzt sein. Die Entnahme-Öffnung 7g sollte in der Entnahme-Drehstellung zweckmässigerweise jedoch die unterste Stelle des Mantel-Teils 7a bilden oder umfassen.

Wenn die Trommel 7 ihre Entnahme-Drehstellung einnimmt, befindet sich die Öffnung 41e des Ge-

häuse-Bodens 41a mindestens teilweise unter der Entnahme-Öffnung 7g der Trommel 7. Die Öffnung 41e hat zweckmässigerweise im Grundriss grössere Abmessungen als die Entnahme-Öffnung 7g, so dass sie die letztere im Grundriss, d.h. in einer vertikalen Projektion, allseitig umfasst.

Das zum Verschliessen der Öffnung 41g des Bodens 41a dienende Verschluss-Element 107 kann beispielsweise als Klappe ausgebildet sein, die mit Scharnieren 221 um eine zur Trommel-Drehachse 5 parallele Schwenkachse schwenkbar gelagert ist. Zum Öffnen und Schliessen des Verschluss-Elements 107 ist mindestens ein pneumatisches Verstellorgan 223 vorhanden, das einen an der untern Seite des Bodens 41a angeordneten Zylinder und einen über eine Gelenkverbindung mit dem Verschluss-Element 107 verbundenen Kolben aufweist. Zweckmässigerweise ist der Boden 41a oder eventuell das Verschluss-Element 107 mit einer Dichtung versehen, so dass die Öffnung 41e fluiddicht abgeschlossen wird, wenn sich das Verschluss-Element 107 in seiner in den Figuren 4, 6 und 7 dargestellten Schliess-Stellung befindet. Beim Öffnen wird das Verschluss-Element 107 nach unten in seine in der Fig. 8 dargestellten Freigabe-Stellung verschwenkt. Wenn sich das Veschluss-Element 13 ebenfalls in seiner Freigabe-Stellung befindet, kann es eventuell teilweise durch die Öffnung 41g hindurchragen.

Nun soll der Betrieb der Vorrichtung erläutert werden. Zunächst wird eine Charge zu überziehender Tabletten durch eine der Öffnungen 71 oder 73 in die Trommel 7 eingebracht. Danach wird die betreffende Öffnung wieder verschlossen und die Trommel 7 mittels der Antriebsvorrichtung 33 in der Richtung des in der Fig. 6 eingezeichneten Pfeils 195 gedreht. Die Tabletten-Charge wird durch die Drehbewegung der Trommel 7 in denjenigen Quadranten der Trommel 7 bewegt, bei dem der Übertragungsschuh 131 angeordnet ist. Die Tabletten-Charge oder -Schicht kann dann etwa durch die in der Fig. 6 strichpunktiert dargestellte Begrenzungsfläche 197 begrenzt werden. Beim Drehen der Trommel 7 wird durch die Rohre 55 und 51 flüssiges oder durch eine Suspension gebildetes Überzugsmaterial zugeführt und mit den Sprühdüsen 53 auf die Tabletten gesprüht. Des weitern wird durch das Gebläse 111 über das Filter 113, das Heizorgan 115 und die Leitung 123 filtrierte und erwärmte Luft oder eventuell ein Schutzgas in die Trommel 7 eingeblasen. Die Luft bzw. das Schutzgas wird durch die Tabletten-Charge und die sich im Bereich der Mündungsöffnung des Übertragungsschuhs 131 befindenden Löcher 7b hindurch in den Übertragungsschuh 131 hinein gesogen und strömt von diesem über die Leitung 141 über das Filter 149 zum Sauggebläse 151.

Wenn der Überzug auf die Tabletten aufgebracht ist, wird die Trommel 7 in der Entleerungs- oder Entnahme-Drehstellung gestoppt. Danach können die Verschluss-Elemente 13 und 107 geöffnet werden, so dass die Tabletten aus der Trommel 7 durch die beiden Öffnungen 7g und 41e hindurch in den Behälter 99 des Wagens 97 hinunter rutschen und -fallen und mit diesem weiter transportiert werden können.

Die in der Trommel vorhandenen Tabletten gelangen bei der Entleerung der Trommel mindestens zu einem grossen Teil ausschliesslich infolge der auf sie einwirkenden Schwerkraft von selbst aus der Trommel heraus. Falls ein Restteil der Tabletten in der Trommel haften bleiben sollte, kann beispielsweise eine Bedienungsperson von einer Trommel-Stirnseiten her die restlichen Tabletten mit einem geeigneten Werkzeug zur Entnahme-Öffnung schieben. Die Tabletten-Entnahme kann also schnell und einfach erfolgen.

Die beiden Gebläse 111 und 151 können derart dimensioniert und eventuell geregelt oder gesteuert werden, dass in der Trommel 7 während des Überzugsvorganges ungefähr Umgebungsdruck herrscht. Dies ermöglicht, während des Überzugsvorganges für eine visuelle Inspektion eines der beiden Verschlusselemente 59 oder 63 vorübergehend zu öffnen, ohne dass dabei nennenswerte Luftmengen in die Trommel einströmen oder Luft und zersprühtes Überzugsmaterial aus dieser ausstrёmt.

Die Verstellbarkeit der Dichtung 193 ermöglicht, den Umfangs- oder Winkelbereich der Trommel, über den Luft aus der Trommel 7 in den Übertragungsschuh 131 hineingesaugt wird, an die Menge und Beweglichkeit der in die Trommel 7 eingebrachten Tabletten anzupassen. Auf diese Weise kann erreicht werden, dass sich der Saugbereich, d.h. die wirksame Mündungsöffnung des Übertragungsschuhs 131 annähernd über die ganze Tabletten-Charge, aber nicht über diese heraus erstreckt.

Für gewisse Anwendungen kann es vorteilhaft sein, die Luft oder das Gas nicht aus der Trommel 7 in den Übertragungsschuh 131 einzusaugen, sondern aus diesem in die Trommel einzublasen und dadurch die Tabletten mehr oder weniger aufzuwirbeln. Dies kann dadurch erreicht werden, dass die sonst offenen Absperrorgane 119 und 147 geschlossen und dafür die sonst geschlossenen Absperrorgane 155 und 159 geöffnet werden.

Die Trommel 7, die Spühdüsen 53, der Übertragungsschuh 131 und andere Teile der Vorrichtung müssen von Zeit zu Zeit und insbesondere beim Wechseln des Produktes, d.h. der Tabletten und/oder des Überzugsmaterials, gereinigt werden. Die Reinigung wird durch die Düsen 103, 105 erleichtert, mit denen die Trommel 7 innen und aussen mit Wasser oder einer andern Reinigungsflüssigkeit besprüht werden kann. Die letztere kann beispielsweise bei geschlossenem Verschluss-Element 13 über einen bei der tiefsten Stelle des Gehäuse-Bodens 41a vorhandenen Ablauf abgeleitet oder abgepumpt werden, wobei eventuell ein geschlossener Kreislauf vorgesehen werden kann. Man kann aber bei der Reinigung auch das im Boden 41a vorhandene Verschluss-Element 107 öffnen und die Reinigungsflüssigkeit in den Behälter 99 des Wagens 97 oder in irgend einen andern Behälter ableiten.

In vielen Fällen genügt jedoch das blosse Besprühen und Sprühen der Trommel 7 und des Gehäuse-Innenraums nicht, um eine ausreichende Sauberkeit zu erzielen. Durch Öffnen der Verschluss-Elemente 59 und 63, die vorzugsweise als Türen ausgebildet sind, kann der Trommel-Innenraum von beiden Trommel-Stirnseiten her zugänglich gemacht werden, so dass die Innenfläche der Trommel beispielsweise mit einer Bürste geschrubbt werden kann. Dabei kann das Düsenhalterrohr 51 vorübergehend aus der Trommel herausgezogen werden. Ferner können die teilweise gebogenen Klappdeckel 91 und 93 aufgeklappt werden. Dadurch wird der Mantel-Teil 7a von beiden Seiten und von oben her zugänglich, was ermöglicht, auch die Aussenflächen der Trommel zu schrubben. Wenn der Klappdeckel 91 geöffnet ist, kann man ferner den Übertragungsschuh 131 in die Reinigungs-Endstellung verschieben. Während sich der Übertragungsschuh 131 in seiner Betriebs-Stellung vollständig innerhalb des Gehäuses 41 befindet, befindet er sich seiner Reinigungs-Endstellung mindestens teilweise und vorzugsweise vollständig ausserhalb des Gehäuses 41. Im weitern kann man ihn nötigenfalls vom Schlitten der schubladenauszugartig ausgebildeten Führung 171 abheben und vollständig vom Gestell 3 und Gehäuse 41 trennen. Wenn also der Übertragungsschuh 131 von seiner Reinigungs-Endstellung in seine Betriebs-Stellung zurückverschoben wird, gelangen die beiden Kupplungsstücke 135, 137 selbsttätig wieder in die Lage, in der sie den Übertragungschuh 131 gasmässig mit dem Leitungsstück 139 verbinden, das mechanisch starr mit dem Gestell 3 verbunden ist.

Die zu reinigenden Teile können also durch Öffnen bzw. Entfernen der Verschluss-Elemente 59, 63 sowie der Klappdeckel 91, 93 rasch und gut zugänglich gemacht werden, wobei auch der Übertragungschuh 131 schnell und einfach von der Trommel 7 getrennt werden kann. Nach der Reinigung kann der Übertragungsschuh 131 wieder in seine Betriebs-Stellung gebracht werden und die Klappdeckel 91, 93 sowie die Verschluss-Elemente 59, 63 können geschlossen und mit vorhandenen Haltermitteln verriegelt oder sonstwie in ihren Schliess-Stellungen gesichert werden.

Das Lager 25 und der Zahn-Ring 31 befinden sich in einem Raumbereich dessen grösste Entfernung vom ihm benachbarten Rand des zylindrischen Mantel-Teils 7a entlang der Drehachse 5 gemessen höchstens etwa 40% und beispielsweise ungefähr oder höchstens 30% des grössten Aussendurchmessers der Trommel, d.h. Aussendurchmessers des Mantel-Teils 7a beträgt. Dies trägt dazu bei, die Grundriss-Abmessungen der Hauptteile der Vorrichtung, nämlich des Gestells 3, der Trommel 7, des Lagers 25 der zum Trommelantrieb dienenden Antriebs- und Getriebemittel 31, 33, 35, 37, des Gehäuses 41 und des sich in der Betriebs-Stellung befindenden Übertragungsschuhs 131 im Vergleich zu den Trommel-Abmessungen verhältnismässig klein zuhalten, was im Hinblick auf die Zugänglichkeit und auch im Hinblick auf den Platzbedarf der Vorrichtung von Vorteil ist. Die Grundriss-Abmessungen der genannten Hauptteile, d.h. praktisch der ganzen Vorrichtung mit Ausnahme der Gebläse 111, 151, der Filter 113, 149, des Heizorgans 115 und der nicht unbedingt notwendigen Absperrorgane 119, 147, 155, 159, sind also nur verhältnismässig wenig grösser als die Grundriss-Abmessungen der Trommel 7. Die quer zur Trommel-Drehachse 5 gemessene Grundriss-Abmessung a der genannten Hauptteile beträgt höchstens das 1,5fache, nämlich beispielsweise ungefähr das 1,3fache des Aussendurchmessers der Trommel 7 oder, genauer gesagt, des dicksten Trommel-Teils. Die parallel zur Drehachse 5 gemessene Grundriss-Abmessung b der genannten Hauptteile beträgt ferner höchstens das Zweifache und vorzugsweise höchstens das 1,8-fache der in der gleichen Richtung gemessenen Trommel-Abmessung. Wenn man nur das eigentliche Gestell und Gehäuse in Betracht zieht und von einigen an sich kleinen, darüber vorstehenden Teilen, insbesondere den Rohren 51 und 55, absieht, so kann das Verhältnis zwischen der parallel zur Drehachse gemessenen Gehäuse-Gestell-Grundriss-Abmessung b' und der in der gleichen Richtung gemessenen Trommel-Abmessung gleich oder kleiner als 1,6 und sogar ungefähr gleich oder kleiner als 1,5 gemacht werden.

Es sei in diesem Zusammenhang vermerkt, dass eventuell auch das Schalt-Tableau 87 von der restlichen Vorrichtung getrennt angeordnet werden kann.

Die Vorrichtung kann in verschiedener Hinsicht modifiziert werden.

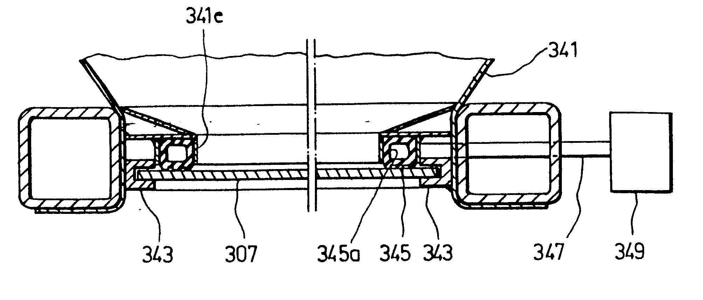

Beispielsweise kann der Boden des die Trommel umschliessenden Gehäuses, wie es in der Fig. 9 für den Boden 341 angedeutet ist, als Wanne ausgebildet werden. Bei deren tiefster Stelle befindet sich eine Öffnung 341e, die der Öffnung 41e entspricht. Mit am Boden 341 bzw. am Gestell der Vorrichtung befestigten Führungen 343 ist ein Verschluss-Element 307 horizontal und beispielsweise parallel zur Trommel-Drehachse verschiebbar geführt. Das Verschluss-Element 307 kann von seiner in der Fig. 7 dargestellten Schliess-Stellung, in der es die Öffnung 341e abschliesst, in eine Freigabe-Stellung verschoben werden, in der es diese freigibt. Das vom Zweck her gesehen dem Verschluss-Element 107 entsprechende Verschluss-Element 307 kann beispielsweise mit einem pneumatischen Verstellorgan verschoben werden, das einen an der Unterseite des Bodens 341 an diesem befestigten Zylinder und einen mit dem Verschluss-Element 307 verbundenen Kolben aufweist. Der Zylinder kann beispielsweise eine am Kolben angreifende Rückstellfeder enthalten, die das Verschluss-Element 307 bei drucklosem Zylinder in der Schliess-Stellung hält.

Der Boden 341 ist mit Mitteln versehen, die eine entlang dem Rand der Öffnung 341e verlaufende, nach unten offene Rinne oder Nut begrenzen. In dieser ist eine die Öffnung 341e vollständig umschliessende Dichtung 345 eingesetzt. Diese weist ein im allgemeinen rechteckiges Profil sowie einen Hohlraum 345a auf und ist elastisch deformierbar, insbesondere im Querschnitt dehnbar. Der Hohlraum 345a ist gegen die Umgebung dicht abgeschlossen und durch eine Leitung 347 fluidmässig mit einer schematisch angedeuteten Druckluft-Steuervorrichtung 349 verbunden. Diese weist Mittel auf, um die Dichtung nach dem Schliessen des Verschluss-Elementes 307 mit Druckluft aufzublasen und vor oder beim Öffnen des Verschluss-Elementes 307 zu entlüften. Wenn sich das Verschluss-Element 307 in seiner Schliess-Stellung befindet und die Dichtung 345 aufgeblasen ist, werden die auf der untern Seiten der letztern vorhandenen Lipppen oder Rippen an das Verschluss-Element angepresst und ergeben eine fluiddichte Abdichtung der Öffnung 341e. Wenn

das Verschieben des Verschluss-Elementes 307 bei entlüfteter Dichtung 345 erfolgt, kann das Verschluss-Element relativ leicht verschoben werden.

Das in den Figuren 4, 6, 7 und 8 dargestellte Verschluss-Element 107 könnte in der Schliess-Stellung in ähnlicher Weise mit einer aufblas- und entlüftbaren Dichtung abgedichtet werden. Desgleichen können auch zum Abdichten der Verschluss-Elemente 59, 63 sowie der Klappdeckel 91, 93 und eventuell auch der Abdeck-Platten 81, 83, 85 aufblas- und entblüftbare Dichtungen vorgesehen werden.

Des weitern könnte die Trommel statt über ein Getriebe mit einem Zahnriemen auch über ein Getriebe mit Kettenrädern und einer Kette oder über ein Getriebe mit unmittelbar ineinander eingreifenden Zahnrädern angetrieben werden. Das zum Lagern der Trommel dienende Lager und der starr mit der Trommel verbundene Zahn-Ring sollten aber derart ausgebildet und angeordnet sein, dass sie sich in einer zur Trommel-Drehachse parallelen Projektion entweder ausserhalb der Begrenzungsmittel befinden, die die auf der betreffenden Trommel-Stirnseite vorhandene, zentrale Öffnung begrenzen, oder allenfalls selbst mindestens einen Teil dieser Begrenzungsmittel bilden.

Wenn das Verschluss-Element 13, wie erwähnt, auch perforiert ist, erstreckt sich die Perforation des Wand-Teils 7a praktisch unterbruchslos entlang dem ganzen Trommel-Umfang. Das zum Verschliessen der Entnahme-Öffnung der Trommel dienende Verschluss-Element könnte jedoch statt perforiert auch lochfrei sein. Die Perforation der Trommel wäre dann entlang dem Trommel-Umfang abgesehen vom Unterbruch durch das relativ schmale Verschluss-Element immer noch unterbruchslos.

Es bestände auch noch die Möglichkeit, für jeden Dichtungs-Halter des Übertragungsschuhs 187, 189, 191 eine Dichtung vorzusehen. Zur Festlegung der Ausdehnung der Mündungsöffnung des Übergangsschuhs 131 kann man dann wahlweise in allen Haltern 187, 189, 191 Dichtungen einsetzen oder nicht, wobei die jeweils unterste Dichtung die Ausdehnung der Mündungsöffnung bestimmt. Des weitern könnte anstelle der drei Halter 187, 189, 191 auch eine andere Anzahl Halter vorgesehen werden. Ferner könnte man die in verschiedenen Stellungen einsetzbare Dichtung 193 durch eine entlang einem zur Trommel-Drehachse koaxialen Kreisbogen verschiebbar geführte, mit Verstellmitteln kontinuierlich verstellbare Dichtung ersetzen. Ferner wäre es möglich, auch die unter Begrenzung der Mündungsöffnung der Übertragungsschuhs veränderbar zu machen.

Ferner könnte man die schubladenauszugartige Führung für den Übertragungschuh durch eine einfache Gleitführung ersetzen. Des weitern könnte man überhaupt auf eine Führung verzichten und den Übertragungsschuh lösbar in seiner Betriebs-Stellung am Gestell der Vorrichtung befestigen. Das Gestell könnte dann mit einer Auflage versehen werden, die den Übertragungsschuh in der Betriebs-Stellung tragen und positionieren kann. Ferner kann beispielsweise eine manuell betätigbare Verriegelungsvorrichtung vorgesehen werden, so dass der Übertragungsschuh für die Reinigung rasch demontiert und danach wieder montiert werden kann. Die der Trommel abgewandte Rückwand des Übertragungsschuhs könnte ferner mit mindestens einer Öffnung versehen sein, die mit einem Verschluss-Element beispielsweise einer Tür, wahlweise gasdicht abschiessbar und freigebbar ist. Wenn der Übertragungsschuh zum Hindurchleiten von Luft benutzt wird, wäre die Tür selbstverständlich geschlossen, wogegen sie zum Reinigen geöffnet werden könnte. Wenn der Übertragungsschuh mit einer derartigen, verschliessbaren Öffnung versehen wird, braucht er also für die Reinigung nicht mehr entfernt zu werden und kann dann sogar unlösbar befestigt werden.

Des weitern könnte man statt nur je eines pneumatischen Verstellorgans 17, 223 je ein Paar Verstellorgane vorsehen. Zudem könnte man anstelle pneumatischer eventuell andere muskelkraftfrei arbeitende Verstellorgane, beispielsweise auch hydraulische oder elektrische Verstellorgane vorsehen.

**Patentansprüche**

1. Vorrichtung zum Überziehen von Teilchen, insbesondere Arzneimittel-Teilchen, wie Tabletten, mit einem Gestell (3), einem Gehäuse (41), einer in diesem angeordnete, mit Lagermitteln drehbar gelagerten Trommel (7) die einen mindestens teilweise perforierten Mantel-Teil (7a) aufweist, Antriebsmitteln zum Drehen der Trommel (7) und einem vom Gestell (3) und/oder Gehäuse (41) gehaltenen Gas-Übertragungsschuh (131), um ein Gas durch den mindestens teilweise perforierten Mantel-Teil (7a) hindurch strömen zu lassen, dadurch gekennzeichnet, dass die Trommel (7) eine Entnahme-Öffnung (7g) zur Entnahme von Teilchen aufweist, die sich mindestens teilweise im genannten Mantel-Teil (7a) befindet, bei einer Drehstellung der Trommel (7) deren tiefste Stelle umfasst und mit einem schwenkbar an der Trommel (7) gehaltenen Verschluss-Element (13) verschliess- und wieder freigebbar ist, und dass das Gehäuse (41) einen Boden (41a, 341) mit einer mit einem Verschluss-Element (107, 307) verschliessbaren Öffnung (41e, 341e) aufweist, die unterhalb der tiefsten Stelle der Trommel (7) angeordnet ist, so dass in der Trommel (7) vorhandene Teilchen abwärts durch die Entnahme-Öffnung (7g) und die Öffnung (41e, 341e) des Gehäuse-Bodens (41, 341) aus der Trommel (7) heraus gelangen können.

2. Vorrichtung nach Anspruch 1, wobei die Trommel (7) um eine horizontale Drehachse (5) drehbar und der mindestens teilweise perforierte Mantel-Teil (7a) im allgemeinen zylindrisch ist und an diesen auf beiden Seiten sich verjüngende, kompakte, perforationslose Wand-Teile (6c, 7d) anschliessen, dadurch gekennzeichnet, dass das zum Verschliessen der Entnahme-Öffnung (7g) dienende Verschluss-Element (13) um eine zur Trommel-Drehachse (5) parallele Schwenkachse verschwenkbar gehalten ist.

3. Vorrrichtung nach Anspruch 1 oder 2, dadurch gekennzeichnet, dass muskelkraftfrei arbeitende, vorzugsweise pneumatische, Verstellorgane (17, 223) zum Verstellen der beiden Verschluss-Elemente (13, 107, 307) vorhanden sind, wobei das Verstellorgan (17), mit dem das zum Verschliessen der Entnahme-Öffnung (79) dienende Verschluss-Element (13) verstellbar ist, vorzugsweise aussen an der Trommel (7) und derart angeordnet ist, dass es beim Rotieren der letzteren den Gas-Übertragungsschuh (137 passieren kann.

4. Vorrichtung nach einem der Ansprüche 1 bis 3, dadurch gekennzeichnet, dass das zum Verschliessen der Öffnung (341e) des Gehäuse-Bodens (341) dienende Verschluss-Element (307) verschiebbar geführt und vorzugsweise mit einer aufblas- und entlüftbaren Dichtung (345) abdichtbar ist.

5. Vorrichtung nach einem der Ansprüche 1 bis 4, dadurch gekennzeichnet, dass die Trommel (7) auf einer Stirnseite eine Öffnung (73) aufweist und dass Gasleitmittel (45, 119, 123, 159) vorhanden sind, um durch diese Öffnung (73) hindurch Gas, insbesondere Luft, in die Trommel (7) hinein oder eventuell aus dieser heraus zu leiten, so dass vorherrschend nur durch diese Öffnung (73) und den sich momentan im Bereich des Gas-Übertragungsschuhs (131) befindenden Abschnitt des mindestens teilweise perforierten Mantel-Teils (7a) Gas in die Trommel (7) hinein und aus dieser heraus strömt.

6. Vorrichtung mach Anspruch 5, dadurch gekennzeichnet, dass die Gasleitmittel einen im Gehäuse (41) angeordneten, bezüglich diesem festen Stutzen (45) aufweisen, der einen die genannte, stirnseitige Trommel-Öffnung (73) umschliessenden Wand-Teil (7d) der Trommel (7) mindestens annähernd berührt.

7. Vorrichtung nach Anspruch 6, dadurch gekennzeichnet, dass das Gehäuse (41) in Bereich des Stutzens (45) eine Öffnung aufweist, die mit einem Verschluss-Element (63) wahlweise verschliess- und freigebbar ist, wobei diese Öffnung des Gehäuses vorzugsweise durch die der Trommel (7) abgewandte Mündung des Stutzens (45) gebildet ist und wobei die Gasleitmittel vorzugsweise eine zwischen der der Trommel (7) zugewandten Mündung und der der Trommel (7) abgewandten Mündung des Stutzens (45), beispielsweise von oben her, in den Stutzen (45) mündende Leitung (123) aufweisen.

8. Vorrichtung nach einem der Ansprüche 5 bis 7, dadurch gekennzeichnet, dass die Gasleitmittel verstellbare Organe (119, 159), insbesondere Absrerrorgane (119, 159), aufweisen, mit denen die genannte stirnseitige Trommel-Öffnung (73) wahlweise mit einem zum Zuführen oder einem zum Absaugen von Luft dienenden Gebläse (111, 151) verbindbar ist.

9. Vorrichtung nach einem der Ansprüche 5 bis 8, dadurch gekennzeichnet, dass ein zum Lagern der Trommel (7) dienendes, zwei Ringe (25a, 25b) und Rollkörper aufweisendes Lager (25) auf derjenigen Seite des mindestens teilweise perforierten Mantel-Teils (7a) angeordnet ist, die der zum Hinein- oder Herausleiten von Gas dienenden, stirnseitigen Öffnung (73) der Trommel (7) abgewandt ist.

10. Vorrichtung nach einem der Ansprüche 1 bis 9, dadurch gekennzeichnet, dass die Trommel (7) auf einer Stirnseite starr mit einem Zahn-Ring (31) verbunden ist, der, vorzugsweise über einen Zahnriemen (37), mit einem drehbar am Gestell (3) gelagerten Zahnrad (35) in Wirkverbindung steht, das durch eine Antriebsvorrichtung (33) drehbar ist.

11. Vorrichtung nach einem der Ansprüche 1 bis 10, dadurch gekennzeichnet, dass das Gehäuse (41) die Trommel (7) gasdicht gegen die Umgebung abschliesst.

**Claims**

.1 Device for the coating of particles, in particular medicinal particles such as tablets, with a frame (3), a housing (41), a drum (7), which is arranged in this, is borne by bearing means to be rotatable and displays an at least partially perforated shell part (7a), drive means for the rotation of the drum (7) and a gas transfer shoe (131) held by the frame (3) and/or housing (41) in order to let a gas flow through the at least partially perforated shell part (7a), characterised thereby, that the drum (7) displays a withdrawal opening (7g), which is for the withdrawal of particles, is disposed at least partially in the named shell part (7a), in one rotational setting of the drum (7) encompasses the lowest place thereof and is closable and again freeable by a closure element (13) held pivotally at the drum (7), and that the housing (41) displays a botton (41a, 341) with an opening (41e, 341e), which is closable by a closure element (107, 307) and is arranged below the lowest place of the drum (7) so that particles present in the drum (7) can get out of the drum (7) downwardly through the withdrawal opening (7g) and the opening (41e, 341e) of the housing botton (41, 341).

2. Device according to claim 1, wherein the drum (7) is rotatable about an horizontal rotational axle (5) and the at least partially perforated shell part (7a) is generally cylindrical and adjoined at both sides by narrowing, solid, imperforate wall parts (6c, 7d), characterised thereby, that the closure element (13) serving for the closure of the withdrawal opening (7g) is held to be pivotable about a pivot axis parallel to the rotational axle (5) of the drum.

3. Device according to claim 1 or 2, characterised thereby, that displacing organs (17, 223) which operate without muscle power and are preferably pneumatic, are present for the displacing of both the closure elements (13, 107, 307), wherein the displacing organ (17), by which the closure element (13) serving for the closure of the withrawal opening (7g) is displaceable, is preferably arranged externally at the drum (7) and in such a manner that it can during rotation of the latter pass the gas transfer shoe (131).

4. Device according to one of the claims 1 to 3, characterised thereby, that the closure element (307) serving for the closure of the opening (341e) of the housing bottom (341) is displaceably guided and preferably sealable by an inflatable and ventilatable seal (345).

5. Device according to one of the claims 1 to 4, characterised thereby, that the drum (7) at one end face displays an opening (73) and that gas-conducting means (45, 119, 123, 159) are present in order to lead gas, in particular air, through this opening (73) into the drum (7) or possibly out of this so as to flow into the drum (7) and out of this predominantly only through this opening (73) and that portion of the at least partially perforated shell part (7a), which is momentarily disposed in the range of the gas transfer shoe (131).

6. Device according to claim 5, characterised thereby, that the gas-conducting means display a stub (45), which is arranged in the housing (41), is rigid with respect to this and at least nearly touches a wall part (7d), encompassing the named end face drum opening (73), of the drum (7).

7. Device according to claim 6, characterised thereby, that the housing (41) in the region of the stub (45) displays an opening which is selectably closable and freeable by a closure element (63), wherein this opening of the housing is formed preferably by that opening of the stub (45), which is remote from the drum (7), and wherein the gas-conducting means preferably display a duct (123) opening into the stub (45), for example from above, between the opening facing the drum (7) and that opening of the stub (45), which is remote from the drum (7).

8. Device according to one of the claims 5 to 7. characterised thereby, that the gas-coducting means display displaceable organs (119, 159), in particular shut-off organs (119, 159), by which the named end face drum opening (73) is connectable selectably with one blower (111, 151) serving for the supplying and one for the exhausting of air.

9. Device according to one of the claims 5 to 8, characterised thereby, that a bearing (25), which serves for bearing the drum (7) and displays two rings (25a, 25b) and rolling bodies, is arranged on that side of the at least partially perforated shell part (7a), which is remote from the end face opening (73), which serves for the leading in and out of gas, of the drum (7).

10. Device according to one of the claims 1 to 9, characterised thereby, that the drum (7) is rigidly connected at one end face with a toothed ring (31), which is in effective connection, preferably by way of a toothed belt (37), with a toothed wheel (35), which is rotatably borne at the frame (3) and rotatable through a driving device (33).

11. Device according to one of the claims 1 to 10, characterised thereby, that the housing (41) seals the drum (7) off in gas-tight manner from the environment.

**Revendications**

1. Dispositif pour recouvrir des particules, en particulier des particules médicamenteuse telles que des comprimés, comportant un châssis (3), un carter (41), un tambour (7) logé dans celui-ci, monté de façon rotative sur des moyens à palier et muni d'une partie d'enveloppe (7a) au moins partiellement perforée, des moyens d'entraînment pour faire tourner le tambour (7) et un sabot de transfert de gaz (131) maintenu par le châssis et/ou par le carter (41) de façon à faire passer un gaz à travers la partie d'enveloppe au moins partiellement perforée (7a), carctérisé en ce que le tambour (7), pour permettre le prélèvement des particules, possède une ouverture de prélèvement (7g) qui est située au moins partiellement dans ladite partie d'enveloppe (7a), qui englobe la partie la plus basse du tambour (7) pour une certaine position angulaire de celui-ci et qui peut être obturée ou libérée à nouveau par un organe d'obturation (13) maintenu de façon pivotante sur le tambour (7), et en ce que le carter (41) possède un fond (41a, 341) muni d'une ouverture (41e, 341e) qui peut être obturée à l'aide d'un organe d'obturation (107, 307) et qui est disposée au-dessous du point le plus bas du tambour (7), de sorte que les particules contenues dans le tambour (7) peuvent sortir du tambour (7) par le bas en passant par l'ouverture de prélèvement (7g) et par l'ouverture (41e, 341e) ménagée dans le fond (41a, 341) du carter.

2. Dispositif selon la revendication 1, dans lequel le tambour (7) est agencé de façon à pouvoir tourner autour d'un axe de rotation horizontal (5), la partie d'enveloppe au moins partiellement perforée (7a) est cylindrique dans son ensemble et des parties de paroi (6c, 7d) compactes et dépourvues de perforation se raccordent des deux côtés à cette partie d'enveloppe en se rétrécissant, caractérisé en ce que l'organe d'obturation (13) servant à obturer l'ouverture de prélèvement (7g) est maintenu de façon pivotante autour d'un prélèvement (7g) est maintenu de façon pivotante autour d'un axe de pivotement parallèle à l'axe de rotation (5) du tambour.

3. Dispositif selon la revendication 1 ou 2, caractérisé en ce qu'il comprend des organes de commande (17, 223) fonctionnant sans l'aide de force musculaire, de préférence pneumatiques, pour déplacer les deux organes d'obturation (13, 107, 307) et en ce que l'organe de commande (17) par lequel peut être déplacé l'organe d'obturation (13) servant à obturer l'ouverture de prélèvement (7g) est disposé de préférence à l'extérieur du tambour (7) et agencé de façon à pouvoir passer devant le sabot de transfert de gaz (131) lors de la rotation du tambour.

4. Dispositif selon l'une des revendications 1 à 3, caractérisé en ce que l'organe d'obturation (307) servant à obturer l'ouverture (341e) ménagée dans le fond (341) du carter est guidé en coulissement et est de préférence rendu étanche par une garniture (345) gonflable et dégonflable.

5. Dispositif selon l'une des revendications 1 à 4, caractérisé en ce que le tambour (7) possède une ouverture (73) sur une face frotale et en ce que des moyens d'amenée de gaz (45, 119, 123, 159) sont prévus pour faire passer du gaz, en particulier de l'air, par cette ouverture (73), vers l'intérieur du tambour (7) ou éventuellement vers l'extérieur de celui-ci, si bien que du gaz n'entre dans le tambour (7) ou n'en sort, au moins essentiellement, que par cette ouverture (73) et par la zone de la partie d'enveloppe au moins partiellement perforée (7a) qui momentanément, se trouve dans la région du sabot de transfert de gaz (131).

6. Dispositif selon la revendication 5, caractérisé en ce que les moyens d'amenée de gaz comprennent un raccord (45), disposé dans le carter (41) et fixe par rapport à celui-ci, qui touche, au moins approximativement, une partie de paroi (7d) du tambour (7) qui entoure ladite ouverture frontale (73) du tambour.

Dispositif selon la revendication 6, caractérisé en ce que, dans la région du raccord (45), le carter (41) comporte une ouverture qui peut à volonté être obturée ou libérée par un organe d'obturation (63), cette ouverture du carter étant de préférence constituée par l'embouchure du raccord (45) éloigneée du tambour (7) tandis que les moyens d'amenée de gaz comprennent de préférence une tuyauterie (123) débouchant, par exemple de haut en bas, dans le raccord (45), entre l'embouchure du raccord (45) tournée vers le tambour (7) et l'embouchure du raccord (45) élognée du tambour (7).

8. Dispositif selon l'une des revendications 5 à 7, caractérisé en ce que les moyens d'amenée de gaz comprennent des organes déplaçables (119, 159), en particulier des organes d'arrêt (119, 159), par lesquels la susdite ouverture frontale (73) du tambour peut être reliée à volonté à une soufflerie servant à insuffler ou à une soufflerie servant à aspirer de l'air (111, 151).

9. Dispositiv selon l'une des revendications 5 à 8 caractérisé en ce qu'un palier (25), servant à maintenir le tambour (7) et comprenant deux cages (25a, 25b) et des corps de roulement, est disposé sur celui des côtés de la partie d'enveloppe au moins partiellement perforée (7a) qui est éloigné de l'ouverture frontale (73) du tambour (7) servant à faire entrer ou sortir du gaz.

10. Dispositif selon l'une des revendications 1, à 9, caractérisé en ce que, sur une face frontale, le tambour (7) est relié rigidement à un anneau denté (31) qui coopère, de préférence par l'intermédiaire d'une courroie crantée (37), avec un pignon (35) qui est monté de façon rotative sur le châssis (3) et qui peut être mis en rotation par un dispositif d'entraînement (33).

11. Dispositif selon l'une des revendications 1 à 10, caractérisé en ce que le carter (41) isole le tambour (7) de l'environnement, d'une façon étanche aux gaz.

Fig.1

0 137 151

Fig.2

Fig.3

Fig. 4

Fig.5

Fig.6

Fig. 7

Fig. 8